# DEMANDE DE BREVET EUROPEEN

(11) **EP 1 798 091 A1**
(43) Date de publication de la demande: **20.06.2007**
(21) Numéro de dépôt: 06350012.8
(22) Date de dépôt: 01.12.2006
(51) Int. Cl.: B60J 7/20

(54) **Véhicule automobile comprenant un élément de coffre rigide mobile**

(30) Priorité: 14.12.2005 FR 0553878
(71) Demandeur: Heuliez, 79140 Cerizay (FR)
(72) Inventeur: Quéveau, Gérard, 79140 Le Pin (FR); Quéveau, Paul, 79140 Montravers (FR); Guillez, Jean Marc, 79140 Cirirères (FR)
(74) Mandataire: Tournel, Jean Louis

(57) **Abrégé**

L'invention concerne un véhicule automobile (1) comprenant un élément de coffre (8) et un toit escamotable composé d'au moins un élément de toit avant (2) et d'au moins un élément de toit arrière (3) ; lesdits éléments de toit (2, 3) étant mobiles entre une position de recouvrement dans laquelle ils recouvrent l'habitacle du véhicule (1) et une position escamotée dans laquelle ils sont repliés dans un espace de stockage (5) situé dans le coffre arrière (6).

L'élément de coffre (8) est rigide et monté mobile sur le châssis (4) du véhicule (1) entre une première position dans laquelle il ferme une partie du coffre arrière (6) et forme ainsi un couvercle de coffre (6) et une seconde position dans laquelle il est disposé entre l'espace de stockage (5) et un second espace du coffre (6).

## Description

L'invention concerne un véhicule automobile équipé d'un toit escamotable mobile entre une position de recouvrement dans laquelle il recouvre l'habitacle du véhicule et une position escamotée dans laquelle il est replié dans un compartiment de stockage du coffre du véhicule. L'invention concerne plus particulièrement les véhicules dont le châssis comporte un coffre arrière.

Dans l'art antérieur, il est connu des véhicules équipés d'un toit escamotable dans le coffre arrière et dont le couvercle de coffre possède deux sens d'ouverture. Le couvercle de coffre s'ouvre de l'avant vers l'arrière pour permettre le passage des éléments de toit et de l'arrière vers l'avant pour l'accès à un second espace. Ledit second espace peut être utilisé pour le rangement des bagages ou pour accueillir le moteur du véhicule. Cependant, habituellement, le mouvement du toit n'est amorcé que lorsque le couvercle de coffre est entièrement ouvert afin d'éviter des interférences entre le toit et le couvercle. Ainsi, la durée entre la commande d'actionnement du toit et la fin du mouvement du toit est relativement longue.

Afin de résoudre ce problème, il est connu d'équiper le couvercle du coffre et le toit avec des capteurs de position. Cependant, cette solution nécessite également une unité de gestion et de traitement des informations provenant des capteurs. Ainsi, cette solution est relativement coûteuse.

Afin de limiter la durée de la transformation du véhicule entre sa configuration dans laquelle le toit en position de recouvrement et sa configuration cabriolet, il est également connu des éléments de toit venant se positionner au-dessus du coffre arrière lorsqu'ils sont dans leur position escamotée. Cependant, la protection des éléments de toit n'est alors pas optimale. De plus, cette disposition particulière des éléments de toit lorsqu'ils sont escamotés provoque une discontinuité dans la ligne de ceinture et l'esthétique du véhicule est modifiée de façon importante.

L'invention vise à remédier à ces problèmes en proposant un véhicule du type cabriolet dont le châssis possède 3 volumes, dont la durée de transformation est optimisée sans agir de façon radicale sur l'esthétique de la partie arrière du véhicule.

A cet effet, et selon un premier aspect, l'invention propose un véhicule automobile comprenant un élément de coffre et un toit escamotable composé d'au moins un élément de toit avant et d'au moins un élément de toit arrière ; lesdits éléments de toit étant mobiles entre une position de recouvrement dans laquelle ils recouvrent l'habitacle du véhicule et une position escamotée dans laquelle ils sont repliés dans un espace de stockage situé dans le coffre arrière.

L'élément de coffre est rigide et monté mobile sur le châssis du véhicule entre une première position dans laquelle il ferme une partie du coffre arrière et forme ainsi un couvercle de coffre et une seconde position dans laquelle il est disposé entre l'espace de stockage et un second espace du coffre.

Ainsi, les possibilités d'interférence entre l'élément de coffre et le toit escamotable sont restreintes et les mouvements de l'élément de coffre et du toit peuvent être simultanés.

En outre, les éléments de toit sont disposés dans un espace de stockage du coffre arrière et l'esthétique du véhicule n'est pas affectée.

Avantageusement, le second espace est un espace de rangement des bagages.

Ainsi, lorsque le toit est en position de recouvrement, l'élément de coffre est disposé dans sa première position et l'espace de stockage des éléments de toit peut également être utilisé pour le rangement des bagages.

Avantageusement, l'élément de coffre forme une cloison de compartimentage entre l'espace de stockage des éléments de toit et le compartiment à bagages.

Ainsi, lorsque le toit est escamoté, l'élément de coffre permet d'assurer la protection des éléments de toit.

Avantageusement, la première position de l'élément de coffre est sensiblement parallèle à la seconde position dudit élément de coffre.

Ainsi, le volume du compartiment de stockage des éléments de toit est adapté à la forme du toit lorsqu'il est dans sa position escamotée en permettant en outre une ouverture d'accès au compartiment à bagages relativement importante.

Dans un mode de réalisation préféré, le véhicule automobile comporte en outre un dispositif de transmission du mouvement du toit audit élément de coffre permettant de façon réversible le mouvement dudit élément de coffre vers sa seconde position lors du mouvement du toit vers sa position escamotée et vers sa première position lors du mouvement du toit vers sa position de recouvrement.

Ainsi, le déplacement de l'élément de coffre ne nécessite pas un actionneur spécifique.

Avantageusement, l'élément de toit arrière est monté articulé sur le châssis du véhicule autour d'un axe de rotation sensiblement transversal audit véhicule, ledit dispositif de transmission étant agencé de manière à ce que la rotation de l'élément de toit arrière autour dudit axe entraîne le mouvement dudit élément de coffre.

Dans un mode de réalisation, le dispositif de transmission du mouvement comprend une bielle. Dans un autre mode de réalisation, le dispositif de transmission de mouvement comprend au moins une chaîne, une courroie ou un câble de transmission.

Ainsi, les dispositifs de transmission sont relativement simples.

Avantageusement, le dispositif d'articulation comprend au moins une première et une seconde bielle montées articulées d'une part sur ledit élément de coffre respectivement selon un premier et deuxième axe de rotation et d'autre part sur le châssis du véhicule respectivement selon un troisième et quatrième axe de rotation. Les quatre axes de rotation forment un quadrilatère déformable.

Ainsi, le dispositif d'articulation de l'élément de coffre est un dispositif simple et peu coûteux permettant à l'élément de coffre d'être disposé dans une première position et une seconde position sensiblement parallèle.

Avantageusement, l'élément de coffre comporte des moyens de verrouillage aptes à coopérer avec des moyens de verrouillage complémentaires solidaires du châssis du véhicule lorsque ledit élément de coffre est dans sa première position.

Dans une mode de réalisation préféré, l'élément de toit avant est agencé pour fermer une partie du coffre arrière et former un couvercle de coffre lorsque ledit élément de toit avant est dans sa position escamotée.

Ainsi, l'encombrement du toit lorsqu'il est dans sa position escamotée est faible.

Le véhicule comporte un portillon monté en rotation sur le châssis entre une position fermée dans laquelle il ferme l'extrémité arrière du coffre arrière et une position ouverte dans laquelle ladite extrémité arrière du coffre est ouverte afin de permettre l'accès au compartiment à bagages.

Ainsi, il est possible d'accéder au compartiment à bagages par l'arrière du véhicule.

D'autres objets et avantages de l'invention apparaîtront au cours de la description qui suit, faite en référence aux dessins annexés, dans lesquels :
- la figure 1 est une représentation schématique de trois quart arrière d'un véhicule automobile selon l'invention ;
- la figure 2 est une vue latérale d'un véhicule automobile selon l'invention représentant le toit dans sa position de recouvrement et dans sa position escamotée (en traits pointillés) et l'élément de coffre dans sa première et sa seconde position.
- la figure 3 est une vue détaillée du coffre du véhicule représentant le mécanisme d'articulation de l'élément de coffre, le dispositif de transmission du mouvement du toit audit élément de coffre et ledit élément de coffre dans sa première position dans laquelle il forme couvercle de coffre ;
- la figure 4 est une vue détaillée du coffre du véhicule représentant le toit escamotable dans sa position escamotée et l'élément de coffre dans sa seconde position dans laquelle il forme une cloison de compartimentage ;
- La figure 5 est une vue détaillée du coffre du véhicule représentant l'élément de coffre dans sa première position (traits pleins) et dans sa seconde position (traits mixtes), le dispositif de transmission du mouvement comprenant une courroie ; et
- La figure 6 est une vue détaillée du coffre du véhicule représentant l'élément de coffre dans ses deux positions et un dispositif d'articulation dudit élément de coffre selon un second mode de réalisation.

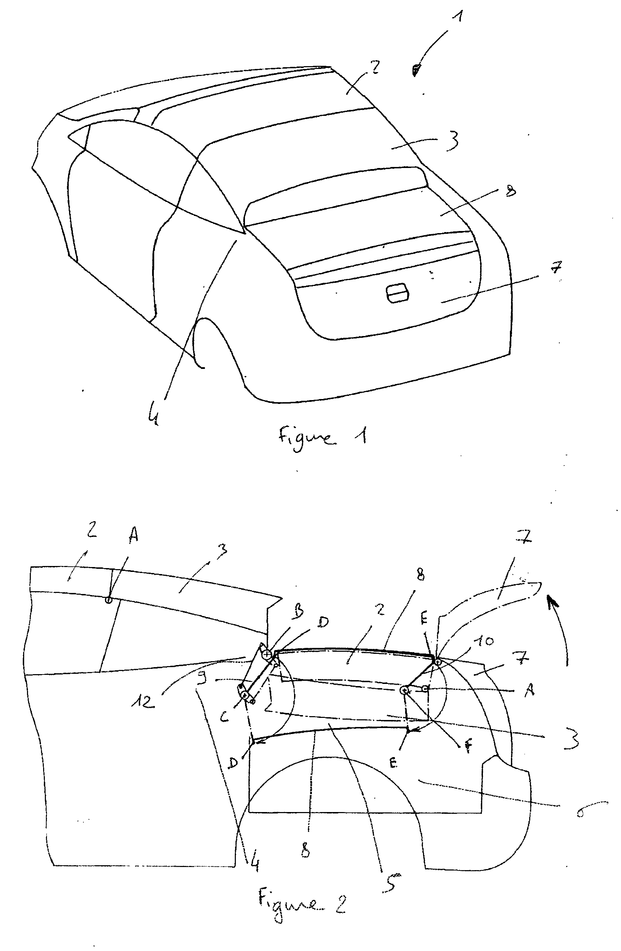

Le véhicule automobile 1, représenté sur la figure 1, est équipé d'un toit escamotable comprenant un élément de toit avant 2 et un élément de toit arrière 3.

L'élément de toit avant 2 est monté articulé sur l'élément de toit arrière 3 selon un premier axe A et l'élément de toit arrière 3 est monté en rotation sur le châssis 4 du véhicule 1 selon un second axe B. Un bras d'articulation, non représenté, est monté d'une part en rotation sur l'élément de toit avant 2 selon un troisième axe et d'autre part monté en rotation sur le châssis 4 du véhicule 1 selon un quatrième axe. Les quatre axes forment un quadrilatère déformable.

Lors du mouvement des éléments 2, 3 de toit entre leur position de recouvrement et leur position escamotée, l'élément de toit arrière 3 est entraîné en rotation dans le sens horaire autour de l'axe B par un actionnement manuel ou motorisé. Lors de ce mouvement, l'élément de toit avant 2 est entraîné en rotation dans le sens anti-horaire par le bras d'articulation et vient se replier sur l'élément de toit arrière 3 dans l'espace de stockage 5 des éléments de toit 2, 3.

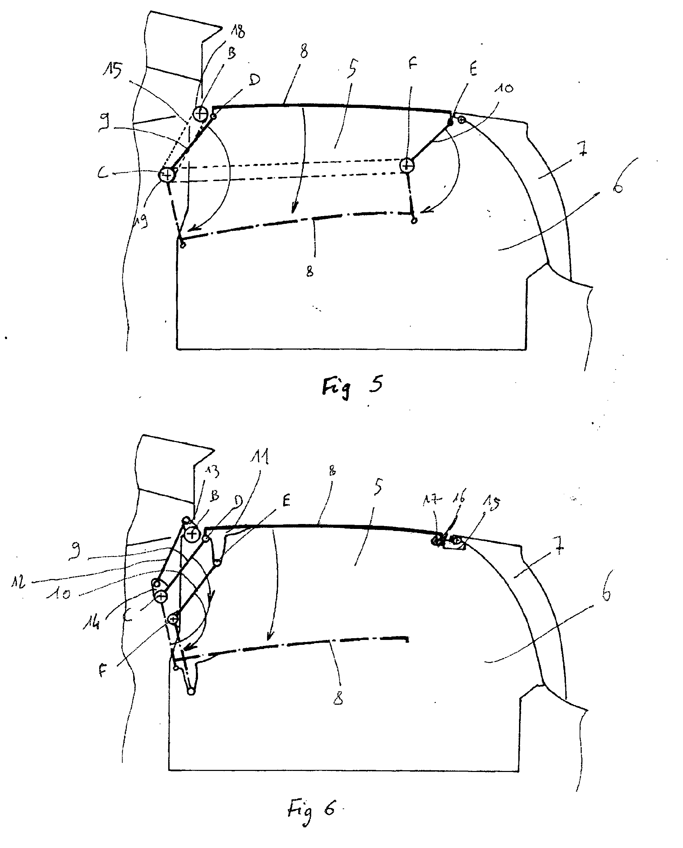

Avantageusement, tel qu'il est illustré sur les figures 2 et 4, l'élément de toit avant 2 est agencé pour fermer une partie du coffre arrière 6 et former un couvercle de coffre lorsque le toit est dans sa position escamotée. A cet effet, la largeur et la longueur de l'élément de toit avant 2 correspondent sensiblement à l'ouverture supérieure du coffre 6 s'étendant entre l'extrémité avant du coffre 6 et un portillon 7 permettant l'accès au coffre 6 par l'arrière du véhicule 1.

Un élément de coffre 8 est monté mobile sur le châssis 4 du véhicule 1 entre une première position dans laquelle il ferme une partie du coffre arrière 6 et une seconde position dans laquelle il forme une cloison entre le compartiment à bagages et le compartiment de stockage 5 des éléments de toit 2, 3.

L'élément de coffre 8 est un élément rigide et résiste par conséquent aux déformations.

On notera que dans un autre mode de réalisation non représenté, le coffre arrière est utilisé pour accueillir le moteur du véhicule.

Le dispositif d'articulation de l'élément de coffre 8 sur le châssis 4 du véhicule 1 est composé de deux bielles 9, 10. La première bielle 9 est montée d'une part articulée sur le châssis 4 selon un axe C et d'autre part articulée sur ledit élément de coffre 8 selon un axe D. La seconde bielle 10 est montée d'une part articulée sur le châssis 4 selon un axe F et d'autre part articulée sur l'élément de coffre 8 selon un axe E. Les axes C, D, E et F forment un quadrilatère déformable.

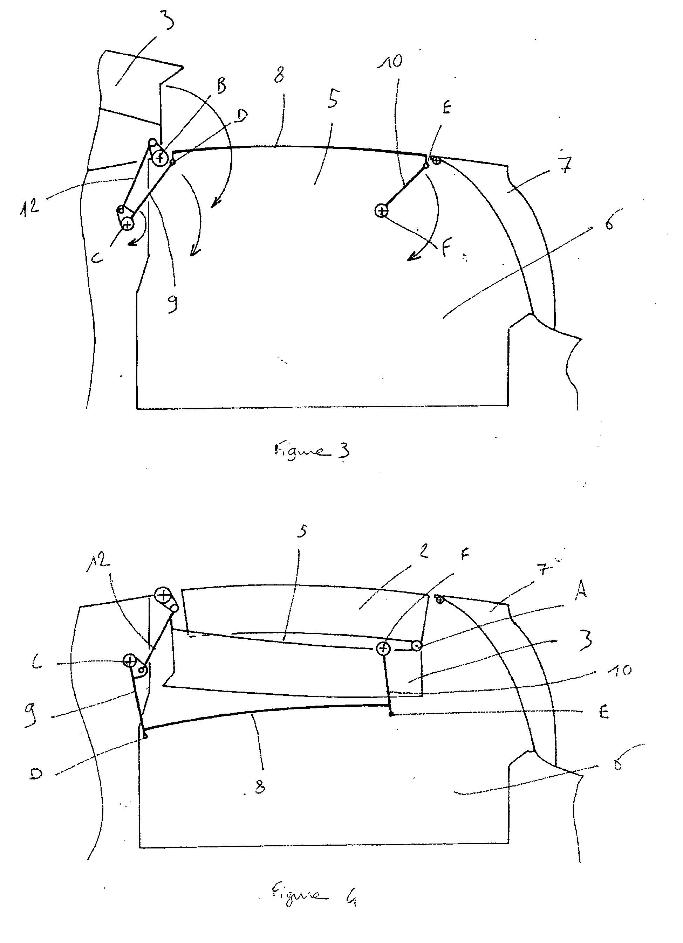

Dans un mode de réalisation représenté sur les figures 2 à 5, la première bielle 9 est disposée à proximité de l'extrémité avant de l'élément de coffre 8 et la seconde bielle 10 à proximité de l'extrémité arrière de l'élément de coffre 8.

Dans un autre mode de réalisation représenté sur la figure 6, une pièce 11 est solidaire de l'extrémité avant de l'élément de coffre 8 et les deux bielles 9,10 sont montées articulées sur ladite pièce 11.

Dans un mode de réalisation préféré de l'invention, le véhicule 1 est équipé d'un dispositif de transmission du mouvement du toit escamotable à l'élément de coffre 8.

Dans le mode de réalisation représenté sur les figures 2, 3, 4 et 6, le dispositif de transmission est composé d'une biellette 12. Ladite biellette 12 de transmission possède une extrémité montée d'une part articulée sur une première patte 13 solidaire de l'élément de toit arrière 3 à proximité de l'axe B et d'autre part articulée sur une seconde patte 14 solidaire de la première bielle 9.

Dans le mode de réalisation représenté sur la figure 5, le dispositif de transmission du mouvement est composé d'une courroie 15. La courroie 15 est, par exemple, engagée d'une part sur un pignon crantée 18 solidaire de l'élément de toit arrière 3 et colinéaire à l'axe de rotation B et d'autre part engagée sur un second pignon crantée 19 solidaire de la première bielle 9 au niveau de l'axe d'articulation C de ladite première bielle 9 sur le châssis 4. On remarquera que le dispositif de transmission peut également être une chaîne ou un câble de transmission.

Selon les modes de réalisation décrits ci-dessus, le mouvement de l'élément de toit arrière 3 par rapport au châssis 4 entraîne le mouvement de l'élément de coffre 8.

Afin de permettre l'accès au compartiment à bagages, le véhicule 1 est équipé d'un portillon 7 disposé à l'extrémité arrière du coffre 6 et monté articulé par rapport au châssis 4. Dans le mode de réalisation représenté, le portillon 7 s'ouvre de l'arrière vers l'avant. Cependant, dans un autre mode de réalisation, le portillon 7 peut s'ouvrir de l'avant vers l'arrière.

Dans un mode de réalisation de l'invention, le châssis 4 comporte une traverse 15 qui est transversale au véhicule 1, disposée entre les bords latéraux du coffre 6 et permet de supporter le bord avant du portillon 7. Le portillon 7 peut être monté articulé sur la traverse 15.

Des moyens de verrouillages 16, 17, représenté sur la figure 6, permettent de verrouiller l'élément de coffre 8 dans sa première position.

Des moyens de verrouillage 17 portés par l'élément de coffre coopèrent avec des moyens de verrouillage 16 complémentaires solidaires du châssis 4. Dans un mode de réalisation particulier, les moyens complémentaires 16 sont portés par la traverse 15.

Les moyens de verrouillage peuvent par exemple être un crochet motorisé 16 s'engageant dans un anneau 17.

## Revendications

1. Véhicule automobile (1) comprenant un élément de coffre (8) et un toit escamotable composé d'au moins un élément de toit avant (2) et d'au moins un élément de toit arrière (3) ; lesdits éléments de toit (2, 3) étant mobiles entre une position de recouvrement dans laquelle ils recouvrent l'habitacle du véhicule (1) et une position escamotée dans laquelle ils sont repliés dans un espace de stockage (5) situé dans le coffre arrière (6) ; ledit véhicule automobile étant **caractérisé en ce que** l'élément de coffre (8) est rigide et monté mobile sur le châssis (4) du véhicule (1) entre une première position dans laquelle il ferme une partie du coffre arrière (6) et forme ainsi un couvercle de coffre (6) et une seconde position dans laquelle il est disposé entre l'espace de stockage (5) et un second espace du coffre (6).

2. Véhicule automobile (1) selon la revendication 1, **caractérisé en ce que** ledit second espace est un espace de rangement des bagages.

3. Véhicule automobile (1) selon la revendication 2, **caractérisé en ce que** l'élément de coffre, dans sa seconde position, forme une cloison de compartimentage entre l'espace de stockage (5) des éléments de toit (2, 3) et le compartiment à bagages.

4. Véhicule automobile (1) selon la revendication 1 à 3, **caractérisé en ce que** la première position de l'élément de coffre (8) est sensiblement parallèle à la seconde position dudit élément de coffre (8).

5. Véhicule automobile (1) selon la revendication 1 ou 4, **caractérisé en ce qu'**il comporte en outre un dispositif de transmission du mouvement du toit audit élément de coffre (8) permettant de façon réversible le mouvement dudit élément de coffre (8) vers sa seconde position lors du mouvement du toit vers sa position escamotée et vers sa première position lors du mouvement du toit vers sa position de recouvrement.

6. Véhicule automobile (1) selon la revendication 5, **caractérisé en ce que** l'élément de toit arrière (3) est monté articulé sur le châssis (4) du véhicule (1) autour d'un axe de rotation B sensiblement transversal audit véhicule (1), ledit dispositif de transmission étant agencé de manière à ce que la rotation de l'élément de toit arrière (3) autour dudit axe B entraîne le mouvement dudit élément de coffre (8).

7. Véhicule automobile (1) selon la revendication 5 ou 6, **caractérisé en ce que** dispositif de transmission du mouvement comprend une biellette (12).

8. Véhicule automobile (1) selon la revendication 5 ou 6, **caractérisé en ce que** le dispositif de transmission de mouvement comprend au moins une chaîne, une courroie (15) ou un câble de transmission.

9. Véhicule automobile (1) selon l'une des revendications 1 à 8, **caractérisé en ce qu'**il est équipé d'un dispositif d'articulation dudit élément de coffre (8) comprenant au moins une première (9) et une seconde bielle (10) montées articulées d'une part sur ledit élément de coffre (8) respectivement selon un axe D et un axe E de rotation et d'autre part sur le châssis (4) du véhicule (1) respectivement selon un axe C et un axe F de rotation ; les quatre axes de rotation C, D, E, F formant un quadrilatère déformable.

10. Véhicule automobile (1) selon l'une des revendications 1 à 9, **caractérisé en ce que** l'élément de coffre (8) comporte des moyens de verrouillage (17) aptes à coopérer avec des moyens de verrouillage complémentaires (16) solidaires du châssis (4) lorsque ledit élément de coffre (8) est dans sa première position.

11. Véhicule automobile (1) selon l'une des revendications 1 à 10, **caractérisé en ce que** l'élément de toit avant (2) est agencé pour fermer une partie du coffre arrière (6) et former un couvercle de coffre (6) lorsque ledit élément de toit avant (2) est dans sa position escamotée.

12. Véhicule automobile (1) selon l'une quelconque des revendications 1 à 11, **caractérisé en ce qu'**il comporte un portillon (7) monté en rotation sur le châssis (4) entre une position fermée dans laquelle il ferme l'extrémité arrière du coffre arrière (6) et une position ouverte dans laquelle ladite extrémité arrière du coffre (6) est ouverte afin de permettre l'accès au compartiment à bagages.
